# EUROPÄISCHE PATENTSCHRIFT

(11) **EP 2 401 164 B1**
(45) Veröffentlichungstag und Bekanntmachung des Hinweises auf die Patenterteilung: **15.05.2013**
(21) Anmeldenummer: 09785961.5
(22) Anmeldetag: 09.06.2009
(51) Int. Cl.: B60F 3/00, B63B 43/14, F41H 7/02

(54) **GEPANZERTES, SCHWIMMFÄHIGES FAHRZEUG**
ARMORED, AMPHIBIOUS VEHICLE
VÉHICULE BLINDÉ AMPHIBIE

(30) Priorität: 24.02.2009 CH 272092009
(43) Veröffentlichungstag der Anmeldung: 04.01.2012
(73) Patentinhaber: Mowag GmbH, 8289 Kreuzlingen (CH)
(72) Erfinder: SCHROETER, Jens, CH-8274 Tägerwilen (CH); KAPELLER, Georg, CH-8500 Frauenfeld (CH); TANNER, Heinrich, CH-8304 Wallisellen (CH)
(74) Vertreter: Quehl, Horst Max
(86) Internationale Anmeldenummer: PCT/IB2009/006014
(87) Internationale Veröffentlichungsnummer: WO 2010/097653

(56) Entgegenhaltungen:
- WO-A1-01/98138
- DE-A1- 1 807 210
- FR-A- 1 329 023
- US-A- 3 595 198
- US-A- 4 287 624
- US-A- 6 116 972
- US-A1- 2003 172 863

## Beschreibung

Die Erfindung betrifft ein gepanzertes, schwimmfähiges Fahrzeug, mit Auftriebskörpern zur Verbesserung des Auftriebs.

Fahrzeuge dieser Art sind beispielsweise bekannt durch die US 2002022415, die US 2003172863 , die US 2005145157 oder die US 3,595,198 und deren Weiterbildung entsprechend der DE 1807210. Diese haben zur Verbesserung des Auftriebs ziehharmonika - oder schirmartig ausfaltbare und somit kammerbildende Auftriebskörper, die beim Fahren an Land zusammengefaltet hinter einer Stahlklappe verborgen sind. Das Ausfalten erfolgt entweder unmittelbar durch Aufblasen oder mittels eines pneumatisch oder hydraulisch betätigten Gestänges. Durch die genannte US 3,595,198 ist es ausserdem bekannt, zum Aufblasen einer ausfaltbaren Hülle ein ausschäumendes Kunststoffmaterial zu verwenden, das in Druckbehältern im Fahrzeug gespeichert ist. Solche Auftriebskörper verursachen jedoch im aktiven Zustand einen hohen Strömungswiderstand des Fahrzeuges und ihr Betätigungsmechanismus ist aufwändig und entsprechend störanfällig. Auch besteht die Gefahr, dass die hohlen Auftriebskörper infolge Geschosseinwirkung undicht werden und sich folglich mit Wasser füllen, so dass ihr Auftrieb verloren geht und sie nicht mehr schliessbar sind. Ausserdem lassen sich die Auftriebskörper der US 3,595,198 nicht wieder in ihren Ausgangszustand zurückführen und müssen folglich nach Gebrauch entsorgt werden. Schliesslich ist es durch die US 4,287,624 bekannt, an nach Kentern leicht sinkbaren offenen Booten oberhalb der Wasserlinie kissenförmige Auftriebskörper zu befestigen.

Der Erfindung liegt die Aufgabe zugrunde, die genannten Nachteile zu vermeiden und ein Fahrzeug der eingangs genannten Art zu finden, dessen Auftriebskörper sich auf einfache und zuverlässige Weise montieren und auch demontieren lassen und die sich optimal der Fahrzeugstruktur anpassen lassen, so dass der Strömungswiderstand im Verhältnis zur erzielten Auftriebswirkung nur gering zunimmt und das äussere Erscheinungsbild des Fahrzeuges auch hinsichtlich seiner Tarnung bzw. hinsichtlich seiner Wärme-, Radar-, akustischen und optischen Signatur vorteilhaft verändert wird. Insbesondere soll auch die dauerhafte Wirkung seiner Vorrichtungen zur Verbesserung des Auftriebs z.B. auch nach Geschosseinwirkung sicher gestellt sein.

Die Lösung dieser Aufgabe erfolgt erfindungsgemäss durch die Merkmale nach Anspruch 1.

Vorteilhafte Ausführungsformen der Erfindung mit ihren weiteren Vorteilen gegenüber vorbekannten Fahrzeugen werden im Folgenden anhand der Zeichnungen näher beschrieben. Es zeigt:
Fig.1 eine Seitenansicht eines gepanzerten Fahrzeuges bekannter Ausführung in schematischer Darstellung, vor Anbringung von Auftriebskörpern,
Fig.2 eine Aufsicht auf das Fahrzeug nach Fig.1
Fig.3 eine Heckansicht des Fahrzeuges nach Fig.1 und Fig.2.
Fig.4 das Fahrzeug entsprechend der Darstellung in Fig.3 in erfindungsgemässer Ausführung mit geschnitten dargestellten Auftriebskörpern,
Fig.5 ein erfindungsgemässes, mit einem Geschütz ausgerüstetes Fahrzeug in schematisch dargestellter Seitenansicht, mit Auftriebskörpern,
Fig.6 das Fahrzeug nach Fig.4 in Aufsicht,
Fig.7 ein erfindungsgemässes Fahrzeug in Seitenansicht mit anderer Verteilung von Auftriebskörpern zur Verbesserung seiner Schwimmposition,
Fig.8 eine Teilansicht eines Fahrzeuges im Bereich seines Propellerantriebs mit in diesen und den Radbereich hineinragendem Auftriebskörper,
Fig.9 einen für den Bereich des Propellerantriebs ausgeformten Auftriebskörper,
Fig.10 eine perspektivische Darstellung gegen die Innenseite von zwei angrenzend an den Propellerantrieb befestigten Auftriebskörpern, mit dem Auftriebskörper nach Fig.9,
Fig.11 einen Querschnitt durch einen Auftriebskörper mit einer Einrichtung für seine lösbare Befestigung am Fahrzeug,
Fig.12 und 13 perspektivische Darstellungen des oberen und unteren Teils der Befestigungseinrichtung nach Fig.11,
Fig.14 eine perspektivische Darstellung eines Auftriebskörpers, mit teilweise weggebrochener Aussenhaut und mit Einformungen zur Aufnahme von Spanngurten,
Fig.15 eine Ansicht gegen die Schmalseite eines für eine Gurtbefestigung vorgesehenen Auftriebskörpers, mit einem Spanngurt und zugehörigen, am Fahrzeug befestigten Teilen einer Spanngurtbefestigung und
Fig.16 und 17 Seitenansichten erfindungsgemässer Fahrzeuge mit weiteren Ausführungsbeispielen der Formgebung von seitlich befestigten Auftriebskörpern.

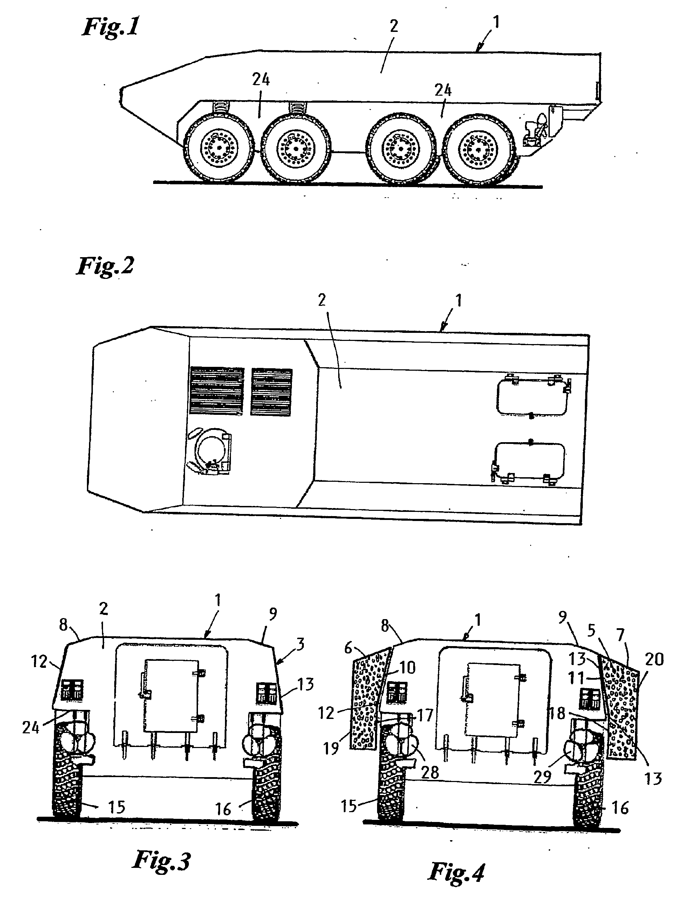

Ein Fahrzeug 1 der in Fig. 1 bis Fig.2 dargestellten Art ist beispielsweise durch die EP 1291610 bekannt. Da der Fahrzeugkörper 2 gegen eindringendes Gas oder Wasser zwar grundsätzlich abgedichtet ist, kann das Fahrzeug auch amphibisch eingesetzt werden. Bei Anbringung einer zusätzlichen Panzerung und/oder von schweren Waffensystemen wird jedoch das für amphibischen Einsatz zulässige Fahrzeuggesamtgewicht überschritten, so dass der Fahrzeugkörper 2 zu weit im Wasser eintaucht und ein sicherer amphibischer Einsatz nicht mehr gewährleistet ist.

Für eine wesentliche Verbesserung des Auftriebs sind erfindungsgemäss am Fahrzeug 1, seiner Kontur 3 angepasst, Auftriebskörper 4,5 vorgesehen.

Entsprechend der aus Fig. 4, 8 bis 11, 14 und 15 ersichtlichen Querschnittform der Auftriebskörper 4, 5 folgt ihre obere Begrenzungsfläche 6,7 durch ihre Neigung dem Verlauf der seitlichen Dachflächenbereiche 8 und 9 des Fahrzeuges 1. Ausserdem folgt ein oberer Bereich 10, 11 ihrer Innenflächen dem Verlauf der steil geneigten Seitenflächen 12, 13 des Fahrzeuges 1, so dass sie sich grossflächig an diesem abstützen. Eventuell von diesen Seitenflächen 12,13 abstehende Ausrüstungsteile des Fahrzeuges 1 können auf nicht dargestellte Weise in entsprechend geformten, örtlichen Ausnehmungen der Auftriebskörper 4,5 aufgenommen werden.

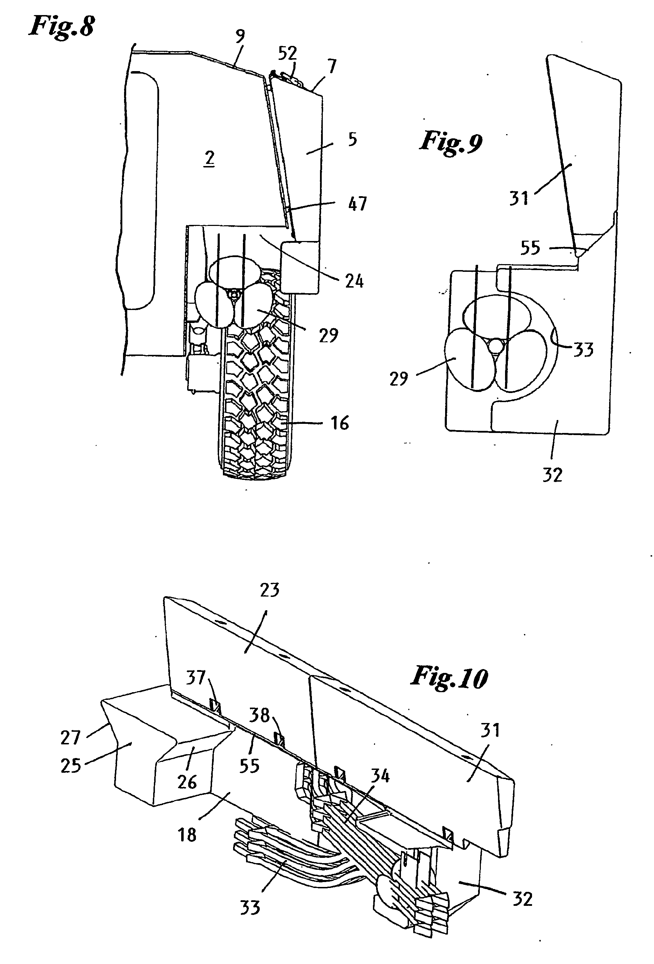

Wie in Fig.4, Fig.5 und Fig.7 oder auch in Fig.8 gezeigt, setzt sich im Bereich der nichtlenkbaren Räder 14, 15, 16 ein unterer Innenflächenbereich 17, 18 der Auftriebskörper 5, 6 nach unten so weit fort, dass ein oberer Bereich der nichtlenkbaren Räder überdeckt wird. Dieser sich somit weit nach unten erstreckende Bereich der sich durch die Auftriebskörper 4, 5 ergebenden Fahrzeugummantelung führt zu einer teilweisen Schliessung der Radkästen, mit entsprechenden Vorteilen hinsichtlich der Fahrzeugsignatur, insbesondere auch hinsichtlich der Verringerung von Fahrgeräuschen und einer Staubaufwirbelung beim Landeinsatz des Fahrzeuges 1.

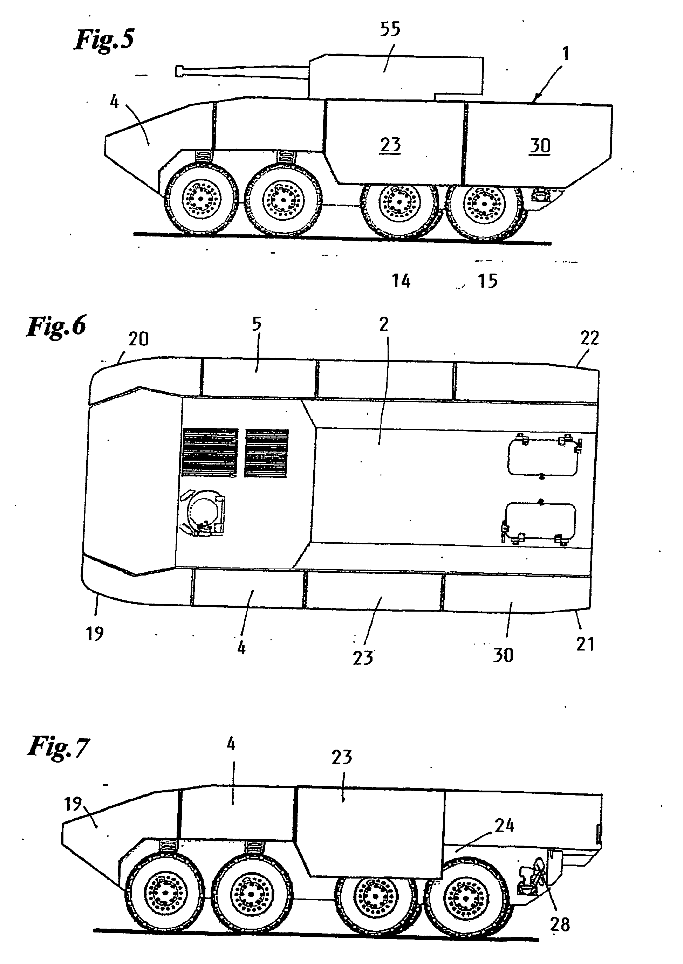

Die Aussenfläche 19, 20 der entsprechend der Darstellung in Fig.5 und 6 in Reihe hintereinander am Fahrzeug 1 befestigten Auftriebskörper 4, 5 kann sowohl hinsichtlich optimaler Fahrzeugsignatur als auch hinsichtlich strömungsgünstiger Formgebung frei gestaltet werden.

Ein Beispiel einer den Strömungswiderstand des Fahrzeuges 1 verringernden Formgebung ist durch die Darstellung in Fig.6 gezeigt, indem dort die Aussenfläche 19 bis 22 der in Fahrtrichtung vorderen und hinteren Auftriebskörper 4, 5 in Fahrzeuglängsrichtung nach Art eines Schiffsbugs und Schiffshecks nach innen abgeschrägt ist.

Zur weiteren Verbesserung des Auftriebs, ohne Vergrösserung der Breite des Fahrzeuges 1, können sich die im Bereich der nicht angetriebenen Räder 14, 15 vorgesehenen Auftriebskörper 23 derart nach innen erstrecken, dass sie einen durch die Räder 14, 15 nicht beanspruchten Innenbereich der Radkästen 24 ausfüllen. Fig.10 zeigt ein Beispiel eines sich vom unteren Innenflächenbereich 17, 18 eines Auftriebskörpers 23 in den Radkasten 24 hinein erstreckenden Querkörpers 25, mit Abschrägungen 26, 27, die parallel zu einer Tangente an den Rädern 14,15 des Fahrzeuges 1 verlaufen, aber auch gekrümmt, dem Radumfang angepasst, geformt sein können.

Eine weitere besondere, die Wasserströmung im Bereich der Propeller 28, 29 verbessernde Formgebung kann entsprechend der Darstellung in Fig. 9 und Fig.10 für die dort befestigten Auftriebskörper 30,31 vorgesehen sein. Entsprechend der Ansicht nach Fig.9 ist in den unteren Teil 32 des Auftriebskörpers 31 ein im Querschnitt halbrunder, der äusseren Umlauffläche des Propellers 29 angepasster, in Fahrzeuglängsrichtung verlaufender Strömungskanal 33 eingeformt. Der sich ergebende Strömungsverlauf ist durch die schematisch dargestellten Strömungslinien 33, 34 angedeutet.

Die dargestellten und beschriebenen Ausführungsformen von am Fahrzeug lösbar befestigten Auftriebskörpern 4, 5, 23, 30, 31 veranschaulichen die erfindungsgemäss mögliche, grosse Variabilität der Formgebung der Auftriebskörper 4, 5, zur optimalen Anpassung hinsichtlich verschiedener, durch die Fahrzeugstruktur vorgegebener Anforderungen. So ist es beispielsweise mit geringem Aufwand möglich, an der dem Fahrzeugkörper 2 zugekehrten Innenseite der Auftriebskörper 4, 5 nichtdargestellte Aussparungen einzuarbeiten, um an der Fahrzeugseitenwand vorgesehene, Erhebungen bildende Ausrüstungsteile umschliessen zu können, so dass diese für einer dichte Anlage der Auftriebskörper 4, 5 an den Fahrzeugseitenflächen 12, 13 nicht hinderlich sind.

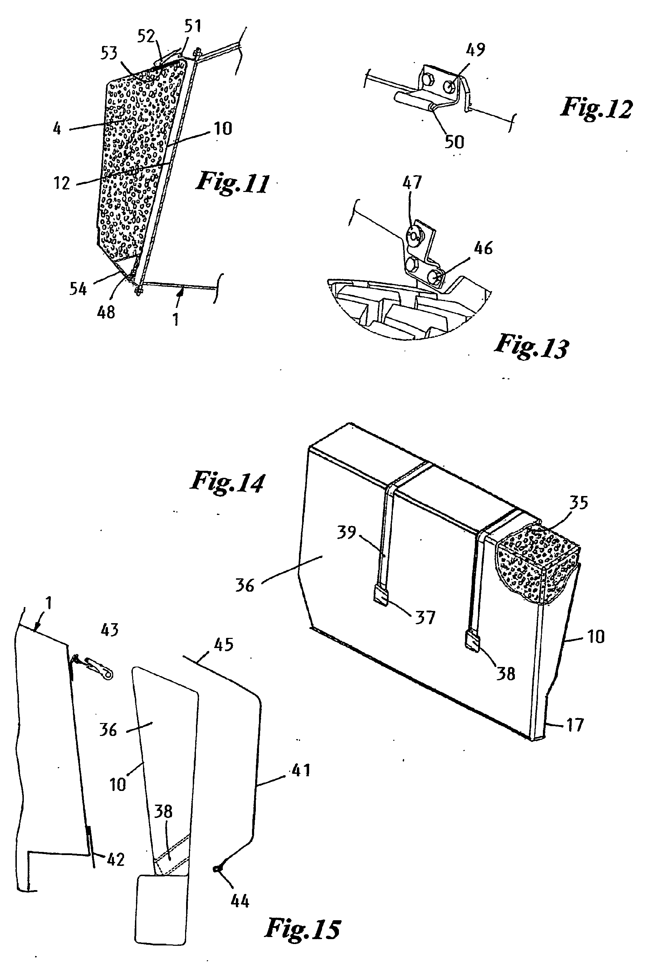

Diese grosse Variabilität der Formgebung wird auf einfache und damit kostengünstige Weise dadurch erreicht, dass die Auftriebskörper aus einem geschlossenporigen und damit leicht bearbeitbaren Schaumkunststoff geformt sind, wie durch die Darstellungen in Fig.11 und Fig.14 gezeigt ist. Entsprechend lässt sich der jeweilige Auftriebskörper auf einfache Weise, z.B. durch die formgebende Bearbeitung eines Rohmaterialkörpers mittels für die Schaumstoffbearbeitung üblichen Schneid - oder Fräswerkzeugen in der gewünschten Form herstellen. Die für den militärischen Fahrzeugbetrieb erforderliche mechanische Oberflächenfestigkeit ergibt sich durch eine nach der Formgebung des Auftriebskörpers erfolgende Beschichtung 35, z.B. mittels eines zähen Kunststofflaminats. Die für die Anordnung in höher beanspruchten Fahrzeugbereichen vorgesehenen Oberflächenbereiche der Auftriebskörper, z.B. im Bereich der Radkästen 24, können jedoch auch stattdessen oder zusätzlich durch Aluminiumblech geschützt sein. Weiterhin können, durch die Ausbildung der Auftriebskörper aus einem geschlossenporigen Schaumkunststoff, in diesen auf einfache Weise Vertiefungen, Kanäle oder andere Formen eingearbeitet werden, die ihre lösbare Befestigung am Fahrzeugkörper 2 ermöglichen.

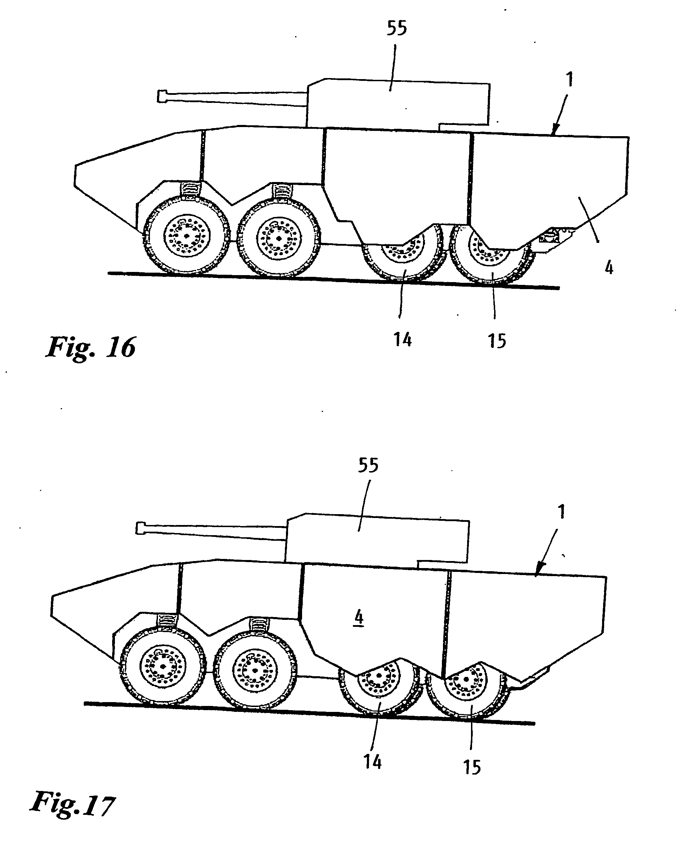

Die weiteren Ausführungsbeispiele der Erfindung entsprechend den Darstellungen der Fig. 16 und 17 zeigen, dass die Auftriebskörper 4 auch in seilticher Ansicht des Fahrzeuges verschieden profiliert sein können, um unter Berücksichtigung von im Bereich der Räder erforderlichen Freiräumen, einen maximalen Auftrieb und Vorteile hinsichtlich der Fahrzeugsignatur zu erreichen.

Für die Befestigung von Auftriebskörpern 36 haben solche entsprechend dem Ausführungsbeispiel nach Fig. 14 oder Fig.15 zwei sich quer hindurch erstreckende Gurtkanäle, mit sich kanalförmig anschliessenden Führungskanälen 40, für die Aufnahme von jeweils einem Spanngurt 41 in üblicher Ausführung. Die schematische Darstellung der Fig.15 zeigt zu dem Spanngurt 41 zugehörige Spanngurtteile 42, d.h. ein Gurtende zur Einführung in das Schnallenende 44 des Gurtes 41 und eine Spannratsche 43, zur Aufnahme und zum Spannen des oberen, freien Gurtendes 45.

Eine weitere Ausführungsform eines lösbaren Befestigungssystems für die Befestigung eines Auftriebskörper 4 am Fahrzeug 1 ist in den Fig.11 bis 13 dargestellt. Dieses hat einen unteren, am Fahrzeug z.B. mittels Schrauben 46 befestigten Rastzapfen 47 für die Einklinkung in einer unteren, innenseitigen Rastöffnung 48 des Auftriebskörpers 4 und einen obere, z.B. mittels Schrauben 49 befestigten Rasthaken 50 für die Aufnahme eines Bügels 51 einer Spannklinke 52. Bei einem solchen Befestigungssystem müssen im Auftriebskörper 4 Trägerplatten 53 oder Trägerprofile 54 für die Anbringung solcher Befestigungsmittel 48, 51, 52 eingearbeitet und z.B. durch Kleben befestigt sein.

Die Grösse der einzelnen am Fahrzeug an den vorgegebenen Befestigungsstellen lösbar und damit auch austauschbar zu befestigenden Auftriebskörper 4, 5, 23, 30 ,31 wird so gewählt, dass sie für eine oder zwei Personen hinsichtlich ihres Gewichtes ausreichend handlich sind, um sie leicht zu tragen und ihre Befestigungsmittel betätigen zu können. Hierzu können die Auftriebskörper zusätzlich zur Fahrzeuglängsrichtung auch für eine Anordnung vertikal übereinander unterteilt und durch nichtdargestellte Befestigungsmittel lösbar miteinander verbunden sein, wie durch die Trennlinie 55 in Fig.9 und Fig. 10 angedeutet ist.

Aufgrund des somit offensichtlichen Baukastenprinzips kann die Anzahl und Verteilung derartiger Auftriebskörper 4, 5 entsprechend dem gewünschten oder erforderlichen Auftrieb unterschiedlich vorgenommen werden, um je nach Ausrüstung, z.B. mit einem Geschütz 55 entsprechend Fig.5 und deren Anordnung im oder am Fahrzeug 1 dessen optimale Schwimmlage auszutarieren. Entsprechend der schematischen Darstellung in Fig.7 sind die Auftriebskörper 4, 23 hierzu beispielsweise auf den vorderen und mittleren Bereich des Fahrzeuges 1 beschränkt.

## Patentansprüche

1. Schwimmfähiges, gepanzertes Fahrzeug mit Auftriebskörpern aus einem geschlossenporigen Schaumkunststoff, **dadurch gekennzeichnet, dass** die Auftriebskörper (4,5,23, 30,31) als an die Fahrzeugkontur angepasste, vorfabrizierte Formkörper, in Reihe hintereinander, mittels lösbaren Befestigungsmitteln (41-43, 47-52) am Fahrzeugkörper (2) befestigt sind und zumindest einige der Auftriebskörper (4,5,23, 30,31) sich an gepanzerten, längsseitigen Seitenflächen des Fahrzeuges (1) entlang nach unten und anschliessend schürzenartig bis über einen oberen Bereich von Rädern (14,15) des Fahrzeuges erstrecken.

2. Fahrzeug nach Anspruch 1, **dadurch gekennzeichnet, dass** die Auftriebskörper (4,5, 23,30,31,36) eine umhüllende Schutzschicht (35) aufweisen.

3. Fahrzeug nach Anspruch 1, **dadurch gekennzeichnet, dass** im Bereich der nicht angetriebenen Räder (14, 15) vorgesehenen Auftriebskörper (23) sich derart nach innen erstrecken, dass sie einen durch die Räder 14, 15 nicht beanspruchten Innenbereich der Radkästen 24 ausfüllen.

4. Fahrzeug nach Anspruch 1, **dadurch gekennzeichnet, dass** an gepanzerten, längsseitigen Seitenflächen des Fahrzeuges (1) befestigten Auftriebskörpern (23) weitere (32) befestigt sind, die sich von diesen (23) schürzenartig nach unten erstrecken.

5. Fahrzeug nach Anspruch 3, **dadurch gekennzeichnet, dass** einige der Auftriebskörper (23) einen sich in einen Radkasten (24) des Fahrzeuges (1) hinein erstreckenden Querkörper (25) aufweisen und zumindest eine Seitenfläche (26,27) des sich in den Radkasten (24) des Fahrzeuges hinein erstreckenden Querkörpers (25) mit Abstand tangential oder parallel zum Radumfang verläuft.

6. Fahrzeug nach Anspruch 1, **dadurch gekennzeichnet, dass** frontseitige Auftriebskörper (4,5) in Fahrt- bzw. Schwimmrichtung schiffsbugähnlich eine nach innen verlaufende Aussenfläche (19,20) aufweisen.

7. Fahrzeug nach Anspruch 1, **dadurch gekennzeichnet, dass** heckseitige Auftriebskörper (31) im Bereich von Propellerantrieben (29) zumindest einen Strömungskanal (33) bilden.

8. Fahrzeug nach Anspruch 1, **dadurch gekennzeichnet, dass** in den Auftriebskörpern (23,36) Aufnahmekanäle (37-40) für jeweils einen Befestigungsgurt (41) vorgesehen sind und am Fahrzeugkörper (2) Gurtbefestigungsmittel (42,43) vorgesehen sind.

## Claims

1. Amphibious, armoured vehicle with floats made from closed-cell plastic foam, **characterised in that** the floats (4, 5, 23, 30, 31) are adapted to the vehicle contour as a prefabricated moulding, are fixed detachably in a row behind one another to the vehicle body (2) by means of fixing means (41 - 43, 47 - 52) and at least some of the floats (4, 5, 23, 30, 31) extend downwards along armour-plated longitudinal lateral surfaces of the vehicle (1) and afterwards extend over an upper region of wheels (14, 15) of the vehicle like an apron.

2. Vehicle according to claim 1, **characterised in that** the floats (4, 5, 23, 30, 31, 36) have an encasing protective coating (35).

3. Vehicle according to claim 1, **characterised in that** floats (23) provided in the region of the non-driven wheels (14, 15) extend inwards in such a way that they fill an unstressed inner region of the wheel bin (24) through the wheels (14, 15).

4. Vehicle according to claim 1, **characterised in that** that additional ones (32) are fitted to the floats (23) fixed to armour-plated, longitudinal lateral surfaces of the vehicle (1), which extend from these (23) downwards like an apron.

5. Vehicle according to claim 3, **characterised in that** some of the floats (23) have a cross member (25) extending into a wheel bin (24) of the vehicle (1) and at least one side surface (26, 27) of the cross member (25) extending into the wheel bin (24) of the vehicle runs tangentially or parallel to the wheel circumference with a gap.

6. Vehicle according to claim 1, **characterised in that** front side floats (4, 5) have an external surface (19, 20) running inwards similar to a ship's bow in the travel or floating direction.

7. Vehicle according to claim 1, **characterised in that** stern-side floats (31) form at least one duct (33) in the region of the propeller drive (29).

8. Vehicle according to claim 3, **characterised in that** receiving channels (37 - 40) are provided in the floats (23,36) for a fastening belt (41) respectively and belt securing means (42, 43) are provided on the vehicle body (2).

## Revendications

1. Véhicule blindé flottant équipé de flotteurs composés d'un plastique cellulaire à pores fermés, **caractérisé en ce que** les flotteurs (4, 5, 23, 30, 31) sont fixés au corps du véhicule (2), sous forme de corps moulés préfabriqués adaptés au contour du véhicule, montés les uns derrière les autres, à l'aide de moyens de fixation (41-43, 47-52) amovibles et **en ce que** au moins certains flotteurs (4, 5, 23, 30, 31) s'étendent au niveau des surfaces latérales longitudinales blindées du véhicule (1) vers le bas puis en formant une jupe jusqu'au-dessus d'une partie supérieure des roues (14, 15) du véhicule.

2. Véhicule selon la revendication 1, **caractérisé en ce que** les flotteurs (4, 5, 23, 30, 31, 36) comportent une couche de protection enveloppante (35).

3. Véhicule selon la revendication 1, **caractérisé en ce que** les flotteurs (23) prévus dans la région des roues (14, 15) non entraînées s'étendent vers l'intérieur, de sorte qu'ils remplissent une région interne du passage de roue (24) non sollicitée par les roues (14, 15).

4. Véhicule selon la revendication 1, **caractérisé en ce que** d'autres flotteurs (32) sont fixés aux flotteurs (23) fixés aux surfaces latérales longitudinales blindées du véhicule (1), ces autres flotteurs s'étendant vers le bas en formant une jupe à partir des flotteurs fixés (23).

5. Véhicule selon la revendication 3, **caractérisé en ce que** certains des flotteurs (23) comportent un corps transversal (25) s'étendant vers un passage de roue (24) du véhicule (1) et **en ce que** au moins une surface latérale (26, 27) du corps transversal (25) s'étendant vers le passage de roue (24) du véhicule génère un écart tangentiel ou parallèle à la circonférence de la roue.

6. Véhicule selon la revendication 1, **caractérisé en ce que** les flotteurs avant (4, 5) comportent une surface externe (19, 20) similaire à une proue de navire orientée vers l'intérieur dans le sens de la marche sur route ou sur eau.

7. Véhicule selon la revendication 1, **caractérisé en ce que** les flotteurs arrière (31) forment au moins un canal d'écoulement (33) dans la région de l'entraînement de l'hélice (29).

8. Véhicule selon la revendication 3, **caractérisé en ce que** des canaux d'écoulement (37-40) sont prévus dans les flotteurs (23, 36) pour chaque sangle de fixation (41) et **en ce que** des moyens de fixation de sangle (42, 43) sont prévus au niveau du corps du véhicule (2).
